# FASCICULE DE BREVET EUROPEEN

(11) **EP 3 835 133 B1**
(45) Date de publication et mention de la délivrance du brevet: **05.10.2022**
(21) Numéro de dépôt: 20213097.7
(22) Date de dépôt: 10.12.2020
(51) Int. Cl.: B60R 9/042, B60R 9/08

(54) **DISPOSITIF POUR PLACER UN OBJET SUR LE TOIT D'UN VÉHICULE**
VORRICHTUNG ZUM PLATZIEREN EINES OBJEKTES AUF EINEM FAHRZEUGDACH
DEVICE FOR PLACING AN OBJECT ON A VEHICLE ROOF

(30) Priorité: 13.12.2019 FR 1914384
(43) Date de publication de la demande: 16.06.2021
(73) Titulaire: Sauvager, Alain, 56200 La Gacilly (FR)
(72) Inventeur: Sauvager, Alain, 56200 La Gacilly (FR)
(74) Mandataire: Derriennic, Tangui Jean

(56) Documents cités:
- WO-A1-2017/048981
- US-A- 5 957 350
- US-A1- 2012 301 265
- US-A1- 2015 090 754

## Description

L'invention concerne un dispositif pour placer un objet, notamment un canot, sur le toit d'un véhicule ou décharger un objet du toit d'un véhicule.

Les canots, notamment les kayaks, canoës, avirons sont généralement trop encombrants pour pouvoir être transportés à l'intérieur d'un véhicule classique. Cependant, leurs usagers souhaitent souvent pouvoir les transporter sur le toit de leur véhicule à moteur et ainsi s'affranchir de tracter une remorque. Ces objets de forme allongée, même s'ils ne sont pas toujours très lourds sont souvent volumineux et par conséquent difficilement manipulables par une personne seule. Par conséquent, les usagers sont toujours à la recherche de dispositifs ou de techniques d'assistance pour placer des objets volumineux sur le toit de leur véhicule.

De tels dispositifs sont déjà connus dans l'art antérieur. Par exemple la demande de brevet US 2008/0035688 divulgue un dispositif comprenant deux supports de charge chacun monté sur un rail de guidage, ledit rail étant fixé à une plaque de fixation attachée à la galerie d'un véhicule. L'objet à hisser sur le toit du véhicule est placé sur les deux supports de charge, parallèlement à la direction du véhicule. Selon une variante, chaque rail de guidage comprend un moyen muni d'une ventouse pour stabiliser le dispositif. Ce dispositif présente néanmoins l'inconvénient d'être volumineux. La demande de brevet US 2012/0301265 décrit un dispositif pour faire glisser un kayak sur une galerie de toit, comprenant une base et une partie incurvée destinée à recevoir le kayak. La base destinée à venir adhérer sur le véhicule comprend une partie support centrale et deux ventouses en ses extrémités. Ce dispositif ne peut cependant pas être utilisé sur tous types de véhicules, en outre seuls les objets présentant une forme particulière peuvent être hissés au moyen de ce dispositif.

En outre US2015/0090754 A1 divulgue un dispositif pour le chargement ou le déchargement d'un objet au-dessus ou du dessus d'un véhicule selon le préambule de la revendication 1 et décrit un support amovible destiné à être placé sur un véhicule pour transporter des articles de type kayaks, ce support comprend un premier ensemble comprenant une première ventouse et une première surface sensiblement horizontale, un deuxième ensemble comprenant une deuxième ventouse et une deuxième surface sensiblement horizontale, dans lequel la première surface sensiblement horizontale et la deuxième surface sensiblement horizontale sont configurées pour être alignées pour supporter l'article ; et une sangle ayant une première extrémité attachée au premier ensemble et une seconde extrémité configurée pour être attachée au véhicule. Le deuxième ensemble de ce dispositif peut également comprendre un bras télescopique pour supporter des articles de plus grande longueur cependant ledit bras télescopique n'est pas monté pivotant par rapport à son support de fixation.

L'invention vise à résoudre un ou plusieurs de ces inconvénients. L'invention porte ainsi sur un dispositif 1 pour le chargement ou le déchargement d'un objet, de préférence un canot, au-dessus ou du dessus d'un véhicule selon la revendication 1.

Avantageusement, le dispositif 1 selon la présente invention est tel que le support de fixation 2 du dispositif à une surface du véhicule, ladite surface s'étendant selon une direction verticale, comprend au moins des première et deuxième ventouses de fixation 21, 22 et un moyen de contact 23 positionnés dans un premier plan, un deuxième plan passant par les première et deuxième ventouses de fixation et perpendiculaire au premier plan délimitant un volume inférieur et un volume supérieur, le moyen de contact 23 étant dans le volume inférieur ;
- le bras télescopique 3 présente une extrémité inférieure 31 solidaire du support de fixation 2 et une extrémité supérieure 32 déployable dans le volume supérieur et selon une direction inclinée par rapport au premier plan, un troisième plan passant par le bras télescopique 3 et perpendiculaire au premier plan, délimitant un volume gauche et un volume droit ;
- le guide 4 dudit objet est solidaire de l'extrémité supérieure déployable 32 du bras télescopique 3 et comporte des première et deuxième surfaces de guidage 41, 42.

Avantageusement, la distance entre les première et deuxième surfaces de guidage est d'au moins 400 mm selon un axe perpendiculaire à ladite direction inclinée, avantageusement elle va de 400 mm à 1200 mm.

L'invention porte également sur les variantes suivantes. L'homme du métier comprendra que chacune des caractéristiques des variantes suivantes peut être combinée indépendamment aux caractéristiques ci-dessus, et également entre elles sans pour autant constituer une généralisation intermédiaire.

Avantageusement, le moyen de contact 23 est symétrique par rapport au troisième plan.

Selon une première variante, le guide 4 comporte :
- une fourche 43 fixée à l'extrémité supérieure 32 du bras télescopique 3 et présentant des première et deuxième extrémités 45, 46 distantes d'au moins 400 mm selon ledit axe perpendiculaire à ladite direction inclinée ;
- une sangle 44 suspendue entre les première et deuxième extrémités de la fourche et formant lesdites première et deuxième surfaces de guidage 41 et 42.

Avantageusement le dispositif comprend un mécanisme de réglage de la longueur de sangle suspendue entre les première et deuxième extrémités 41 et 42.

Selon une deuxième variante, le guide 4 comporte des rouleaux formant lesdites première et deuxième surfaces de guidage.

Selon une troisième variante, le guide 4 est monté pivotant par rapport audit support de fixation 2 sur une course limitée.

Selon une quatrième variante, le guide 4 est monté pivotant autour de ladite direction inclinée.

Selon une cinquième variante, la première ventouse de fixation 21 est dans le volume gauche, et la deuxième ventouse de fixation 22 est dans le volume droit, et de préférence, le moyen de contact 23 comporte un premier et un deuxième organes de contact, le premier organe de contact 231 étant dans le volume gauche, le deuxième organe de contact 232 étant dans le volume droit.

De manière encore préférée, le premier organe de contact (231) comporte une première ventouse de contact et le deuxième organe de contact (232) comporte une deuxième ventouse de contact.

Le dispositif selon l'invention présente les avantages suivants : il peut être utilisé pour placer des objets de formes diverses, mais présentant généralement une configuration allongée, sur le toit d'un véhicule. En effet même s'il est plus spécifiquement dédié au placement d'objets flottants de petite taille tels que des canoës, kayaks, avirons, il peut également être utilisé pour des emballages volumineux tels que des cartons de forme allongée ou des sacs dédiés au transport de matériel de sport tels que du matériel de kite-surf, de ski. En outre, le dispositif selon la présente invention peut être utilisé pour effectuer un chargement sur tout type de barres de toit, il ne requiert pas l'utilisation de barres de toit spécifiques.

Par ailleurs le dispositif selon l'invention est léger et peut être aisément transporté dans le véhicule sur lequel il est destiné à être installé. Grâce à son bras télescopique, il est également peu encombrant, cette propriété est encore améliorée dans les variantes du dispositif selon l'invention dans desquels la distance entre les première et deuxième surfaces de guidage est modulable. En effet dans ces variantes, les première et deuxième surfaces de guidage sont montées sur une base de support 47 rétractable, en particulier une base télescopique ou une base présentant au moins deux parties repliables, de préférence deux parties repliables, c'est-à-dire rabattables l'une sur l'autre.

Le dispositif selon l'invention est également facile à mettre en place, à manipuler puis à ranger après utilisation. Le dispositif selon la présente invention permet un chargement/ déchargement du véhicule par le côté, ce qui s'avère particulièrement pratique notamment lorsque l'arrière du véhicule n'est pas accessible.

D'autres caractéristiques et avantages de l'invention ressortiront clairement de la description qui en est faite ci-après, à titre indicatif et nullement limitatif, en référence aux dessins annexés, dans lesquels :

[Fig.1] est une vue en perspective de l'avant du dispositif selon l'invention muni de surfaces de guidage sous forme de rouleaux.

[Fig.2] est une vue de côté du support de fixation du dispositif selon l'invention muni de surfaces de guidage sous forme de rouleaux.

[Fig.3] est une vue en perspective de l'arrière du dispositif selon l'invention muni de surfaces de guidage sous forme de rouleaux.

[Fig.4] est une vue du dessus du dispositif selon l'invention muni de surfaces de guidage sous forme de rouleaux.

[Fig.5] est une vue en perspective du dispositif selon l'invention muni de surfaces de guidage sous forme d'une sangle.

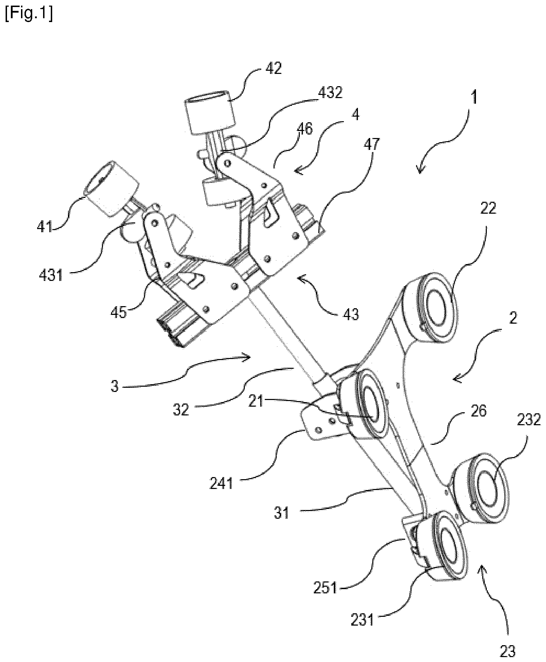

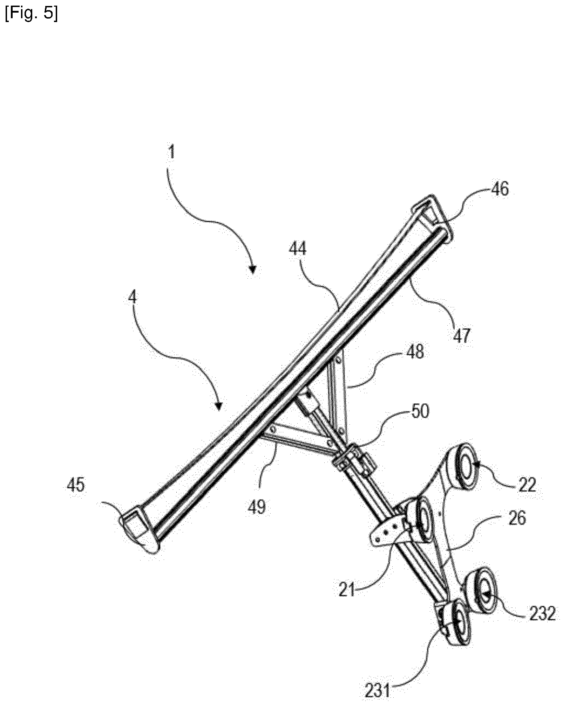

Les figures 1 à 4 sont particulièrement destinées à présenter en détail le support de fixation 2 et le bras télescopique 3 du dispositif selon l'invention 1, en conséquence le guide 4 n'est pas représenté dans sa configuration prête à l'utilisation. La figure 5 est destinée à présenter en détail un guide 4 comportant une sangle 44.

### Description détaillée

Dans le présent texte, des expressions telles que « au-dessus », « avant », « arrière », « devant », « haut », « vertical », « transversal » ou « transversalement », « supérieur », « inférieur » sont utilisées. Lorsqu'elles se rapportent au dispositif, ces expressions doivent être interprétées de façon relative, en considérant que le support de fixation 2 est situé dans la partie inférieure du dispositif et le guide 4 est situé dans la partie supérieure. En outre, la face « avant » du support de fixation correspond au premier plan - comprenant les première et deuxième ventouses de fixation 21, 22 et le moyen de contact 23-.

Lorsqu'elles se rapportent à un véhicule, ces expressions doivent être interprétées de façon relative, en relation avec la position normale d'un véhicule à l'arrêt.

Par véhicule, au sens de la présente invention on entend aussi bien les véhicules à moteur tel que les voitures, camions, camionnettes, fourgons, que les véhicules sans moteurs tels que les remorques, caravanes.

Le dispositif 1 selon la présente invention est adapté pour placer un objet sur le toit d'un véhicule, en particulier pour placer un objet sur des barres de toit et décharger ledit objet du toit. En général, les systèmes de barres de toit comprennent une première barre de toit disposée vers l'avant du véhicule et une deuxième barre de toit disposée vers l'arrière du véhicule. Dans la suite de la description le dispositif est décrit pour hisser un kayak sur le toit d'une voiture. Bien entendu, il peut également être utilisé pour charger/décharger d'autres types d'objets sur le toit d'un véhicule.

La surface de véhicule sur laquelle est fixé le dispositif 1 doit être une surface s'étendant verticalement, ladite surface peut être une surface latérale du véhicule par rapport à l'axe principal dudit véhicule ou une surface à l'arrière du véhicule notamment dans le cas d'une voiture de type break ou d'un fourgon. La surface de véhicule sur laquelle est fixé le dispositif 1 peut être un ouvrant telle qu'une portière située sur une partie latérale par rapport à l'axe principal du véhicule ou une portière de coffre située à l'arrière du véhicule dans le cas d'un fourgon, véhicule de type break. La surface de véhicule sur lequel est fixé le dispositif 1 peut également être une partie non ouvrante notamment dans le cas d'un fourgon.

Généralement le dispositif 1 selon l'invention est placé dans une zone située au centre de la surface considérée du véhicule ce qui permet de renforcer sa stabilité lors de la manipulation du kayak, plus particulièrement le dispositif 1 est placé à une hauteur correspondant au milieu de la hauteur de véhicule.

Le dispositif 1 selon l'invention comprend un support de fixation 2 destiné à fixer ledit dispositif à une surface de véhicule, un guide 4 adapté pour charger/décharger le kayak et pour faire pivoter le kayak sur le toit d'un véhicule ainsi qu'un bras télescopique 3 permettant le réglage de la distance entre le support de fixation 2 et le guide 4, la longueur du bras télescopique 3 étant adaptée pour permettre de positionner le guide 4 à une hauteur supérieure à la hauteur du véhicule, de préférence à une hauteur supérieure de 100 à 200 mm par rapport à la hauteur du véhicule.

La présente invention porte sur un dispositif 1 pour le chargement d'un objet au-dessus d'un véhicule ou pour le déchargement d'un objet du dessus d'un véhicule comprenant un support de fixation 2 dudit dispositif à une surface du véhicule s'étendant selon une direction verticale, ledit support de fixation 2 comprenant au moins une première ventouse de fixation et au moins un moyen de contact 23, un bras télescopique 3 présentant une extrémité solidaire du support de fixation 2, l'autre extrémité étant déployable, et un guide 4 dudit objet, solidaire de l'extrémité déployable du bras télescopique 3, le guide 4 comportant au moins une première surface de guidage, ledit guide étant monté pivotant par rapport audit support de fixation.

Avantageusement, le dispositif selon la présente invention est tel que le support de fixation 2 comprend au moins des première et deuxième ventouses de fixation 21, 22 et un moyen de contact 23 positionnés dans un premier plan, un deuxième plan passant par les premières et deuxièmes ventouses de fixation et perpendiculaire au premier plan délimitant un volume inférieur et un volume supérieur, le moyen de contact 23 étant dans le volume inférieur ;
le bras télescopique 3 présentant une extrémité inférieure 31 solidaire du support de fixation 2 et une extrémité supérieure 32 déployable dans le volume supérieur et selon une direction inclinée par rapport au premier plan, un troisième plan passant par le bras télescopique 3 et perpendiculaire au premier plan, délimitant un volume gauche et un volume droit ;
le guide 4 dudit objet étant solidaire de l'extrémité supérieure déployable 32 du bras télescopique 3 et comportant des première et deuxième surfaces de guidage 41, 42.

Selon une première variante, le guide 4 comporte :
- une fourche 43 fixée à l'extrémité supérieure 32 du bras télescopique 3 et présentant des première et deuxième extrémités 45, 46 distantes d'au moins 400 mm selon ledit axe perpendiculaire à ladite direction inclinée ;
- une sangle 44 suspendue entre les première et deuxième extrémités de la fourche et formant lesdites première et deuxième surfaces de guidage 41 et 42.

Selon une deuxième variante, le guide 4 comporte des rouleaux formant lesdites première et deuxième surfaces de guidage 41 et 42.

La fixation du dispositif à une surface de véhicule est assurée par le support de fixation 2 qui comprend au moins une première ventouse de fixation et au moins un moyen de contact 23.

Selon un mode préféré le support de fixation 2 comprend des première et deuxième ventouses de fixation 21, 22 et un moyen de contact 23. La première ventouse de fixation 21 est dans le volume gauche, et la deuxième ventouse de fixation 22 est dans le volume droit, les volumes droit et gauche étant définis par rapport au troisième plan. Les première et deuxième ventouses de fixation 21, 22 forment avec le moyen de contact 23 le premier plan.

Plus exactement, ledit premier plan est défini par les trois points correspondant aux barycentres géométriques des surfaces de contact de ces trois éléments : première et deuxième ventouses de fixation 21, 22 et moyen de contact 23.

Les première et deuxième ventouses de fixation 21, 22 sont positionnées sur une base de fixation 26, elles assurent l'essentiel de la fixation à la surface du véhicule. La base de fixation 26 peut se présenter sous forme de « T » ou de « Y ». Le moyen de contact 23 permet d'assurer un appui apte à stabiliser le dispositif et à répartir le poids de l'objet à hisser sur une surface plus importante, il permet également de protéger la surface de véhicule des dommages que pourraient occasionner les forces appliquées par le dispositif.

Selon une première variante, le moyen de contact 23 peut consister en une simple surface d'appui, tel qu'un coussinet, configurée de manière à être symétrique par rapport au troisième plan. En outre cette surface d'appui peut être incurvée de façon à épouser la courbure de la surface du véhicule. Le moyen de contact 23 est avantageusement situé à distance égale des première et deuxième ventouses de fixation 21, 22.

Selon une autre variante, le moyen de contact 23 comporte un premier organe de contact 231 dans le volume gauche et un deuxième organe de contact 232 dans le volume droit. Les première ventouse 21 et deuxième ventouse 22 de fixation ainsi que les premier et deuxième organes de contact 231 et 232 sont fixés sur la base de fixation 26 du support de fixation 2. Cette variante présente l'avantage d'augmenter la stabilité du dispositif. Les organes de contact 231 et 232 peuvent consister chacun en une simple surface d'appui, tel qu'un coussinet ou ils peuvent aussi consister en des ventouses dites ventouses de contact 231 et 232. La variante avec des ventouses de contact 231 et 232 présente l'avantage d'augmenter la stabilité du dispositif ainsi que son adhérence à la surface du véhicule.

Chaque ventouse comporte une calotte, formant sa partie avant, en matériau flexible généralement en caoutchouc destinée à venir adhérer à la surface de véhicule et un système d'accrochage, formant sa partie arrière, de ladite ventouse à la base de fixation 26.

Le support de fixation 2 comprend également un système d'attache à l'extrémité inférieure 31 du bras télescopique 3 apte à rendre le bras télescopique 3 solidaire du support de fixation 2.

Selon une variante préférée, ledit système d'attache comporte deux organes d'attache de la base de fixation 26 à l'extrémité 31 du bras télescopique : un organe d'attache supérieur situé à l'arrière de la première ventouse de fixation et un organe d'attache inférieur situé à l'arrière du moyen de contact 23, les organes d'attache supérieur et inférieur comportant chacun deux montants 241, 242 et 251, 252 liés à l'arrière de la base de fixation 26 et reliés entre eux par une entretoise respective 240 et 250. La fixation de chaque entretoise aux montants est généralement assurée par un système de vis-écrou. Avantageusement les entretoises 240 et 250 sont de forme tubulaire.

Les premier 241 et d'un deuxième 242 montants supérieurs peuvent être munis d'une série d'alésages, généralement 2, 3, 4 ou 5 alésages permettant de définir plusieurs positions de l'entretoise 240 et par conséquent plusieurs inclinaisons du bras télescopique 3. Ces différentes inclinaisons permettent d'adapter le dispositif selon l'invention à des véhicules de forme différente. La fixation de l'entretoise 240 dans un des alésages peut être assurée par un système de vissage dans un filetage. L'ajustement d'inclinaison est effectué en dévissant les deux vis en place dans un couple d'alésages présents dans les premier 241 et deuxième 242 montants supérieurs et en déplaçant l'entretoise 240 de manière à placer le filetage devant un autre couple d'alésages et à visser les deux vis dans cet autre couple d'alésages.

Le bras télescopique 3 comprend une extrémité inférieure 31 solidaire du support de fixation 2 et une extrémité supérieure 32 déployable. L'extrémité supérieure 32 est déployable dans le volume supérieur selon une direction inclinée par rapport au premier plan, ainsi lorsque le dispositif 1 est fixé à la surface de véhicule, le bras télescopique 3 est déployable vers le haut de manière à placer le guide 4 à proximité du toit du véhicule. Avantageusement l'angle entre le bras télescopique et le premier plan est compris entre 17° et 45°.

Comme déjà mentionné, le dispositif 1 selon l'invention comprend un système d'attache du support de fixation 2 à l'extrémité inférieure 31 du bras télescopique 3. Le bras télescopique comporte deux parties tubulaires formant l'extrémité inférieure 31 et extrémité supérieure 32. Ces deux parties tubulaires présentent des sections de même forme. La section des parties tubulaires peut être de forme carrée ou circulaire, de préférence ladite section est de forme circulaire. La taille de la section de l'extrémité inférieure 31 est supérieure à la taille de la section de l'extrémité supérieure 32 de manière à pouvoir faire coulisser ladite extrémité supérieure 32 à l'intérieur de l'extrémité inférieure 31. La longueur du bras télescopique 3 va de 500 mm à 1000 mm, cette longueur permet de fixer le dispositif sur le véhicule à une hauteur à laquelle ledit dispositif est aisément manipulable et à laquelle le guide 4 est positionné au-dessus du véhicule, de préférence à une distance d'environ 100 à 200 mm au-dessus du véhicule.

L'extrémité supérieure 32 est en outre configurée de manière à pouvoir pivoter librement autour de son axe principal, c'est-à-dire autour de la direction inclinée, et permettant ainsi au guide 4 d'être apte à pivoter par rapport audit support de fixation 2.

Selon une variante de l'invention, l'extrémité supérieure 32 est munie d'une butée 50 limitant le pivotement de ladite extrémité supérieure à un angle prédéterminé, de préférence inférieur à 180°. Cette variante permet le montage du guide pivotant par rapport audit support de fixation 2 sur une course limitée, de préférence limitée à 180°. Cette variante permet une meilleure maîtrise de la manipulation des objets en particulier elle permet d'éviter que les objets lourds soient déportés, c'est-à-dire déviés de la direction dans laquelle l'utilisateur souhaite les orienter.

L'extrémité supérieure 32 peut aussi comprendre un moyen de renfort du guide, en particulier un ensemble de traverses fixé à la fois en un point de l'extrémité supérieure 32 et en un point du guide 4. Ce moyen de renfort du guide permet de maintenir l'écartement entre lesdits points de fixation de l'extrémité supérieure 32 et du guide 4 et ainsi de renforcer la structure du dispositif. Un moyen de renfort du guide est avantageusement aménagé lorsque le dispositif est destiné à hisser des charges lourdes.

Le guide 4 comporte une fourche 43 fixée à l'extrémité supérieure 32 du bras télescopique 3 et présentant des première et deuxième extrémités 45, 46. Ladite fourche 43 comprend, de préférence est formée de, une base de support 47 et deux montants correspondant aux première et deuxième extrémités 45, 46 sur lesquels sont fixés les première et deuxième surfaces de guidage 41, 42. La base de support 47 peut être plane ou incurvée.

Selon une première variante, la base de support 47 et les deux montants 45, 46 constituent une seule pièce c'est-à-dire qu'ils sont monoblocs.

Selon une deuxième variante, les montants 45, 46 sont deux parties détachables de la base de support 47.

La base de support 47 peut également être rétractable, en particulier elle peut être télescopique ou encore elle peut être composée d'au moins deux parties repliables, de préférence deux parties repliables, c'est-à-dire rabattables l'une sur l'autre.

Selon une première variante de l'invention, les première et deuxième surfaces de guidage sont formées par des rouleaux. Ces rouleaux 41, 42, sont à rotation libre, ils sont montés sur des supports de rouleaux 431, 432 fixés respectivement aux première et deuxième extrémités 45, 46. Cette variante est notamment préférée lorsque la face de l'objet à hisser qui est mise au contact des première et deuxième surfaces de guidage est plane.

Selon une deuxième variante de l'invention, une sangle 44 suspendue entre les première et deuxième extrémités 45, 46 de la fourche forme les première et deuxième surfaces de guidage. Cette variante est notamment préférée lorsque la face de l'objet à hisser qui est mise au contact des première et deuxième surfaces de guidage est convexe. A titre d'exemple, cette variante est utilisée lorsque l'objet à hisser est un canoé en particulier un kayak. Selon une variante, un mécanisme de réglage de la longueur de sangle suspendue entre les première et deuxième extrémités est aménagé, de préférence le mécanisme de réglage est une boucle de réglage coulissante ou une pince de réglage anti-retour.

Le dispositif selon la présente invention est généralement fabriqué en un matériau léger, de préférence en aluminium.

En référence aux figures 1 à 5 annexées le dispositif 1 selon l'invention comporte un support de fixation 2, un bras télescopique 3 et un guide 4 comportant au moins une surface de guidage.

En référence aux figures 1, 2 et 5, le support de fixation 2 comprend une base de fixation 26 sur laquelle sont fixées les première 21 et deuxième 22 ventouses de fixation ainsi que des première et deuxième ventouses de contact 231 et 232. Les première et deuxième ventouses de fixation 21, 22 ainsi que les première et deuxième ventouses de contact 231 et 232 sont positionnées dans le premier plan situé à l'avant de la base de fixation 26.

Le première 21 et deuxième ventouses 22 sont situées dans le volume supérieur, la première ventouse 21 dans le volume gauche, la deuxième ventouses 22 dans le volume droit. Les première et deuxième ventouses de contact 231 et 232 sont situées dans le volume inférieur, la première ventouse de contact 231 dans le volume gauche, la deuxième ventouse de contact 232 dans le volume droit.

Le support de fixation 2 comprend également un système d'attache à l'extrémité inférieure 31 du bras télescopique 3, ledit système d'attache étant situé à l'arrière de la base de fixation 26. Plus particulièrement, le système d'attache comporte un organe d'attache supérieur situé à l'arrière des première et deuxième ventouses de fixation 21, 22, et un organe d'attache inférieur situé à l'arrière du moyen de contact 23.

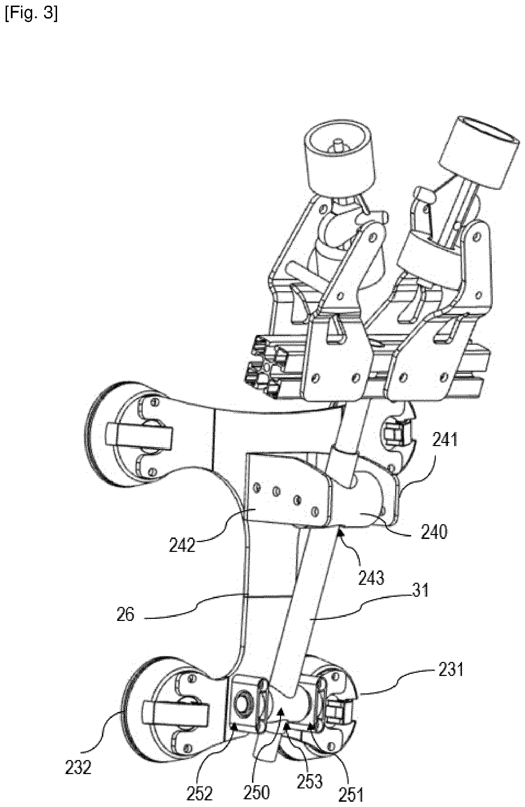

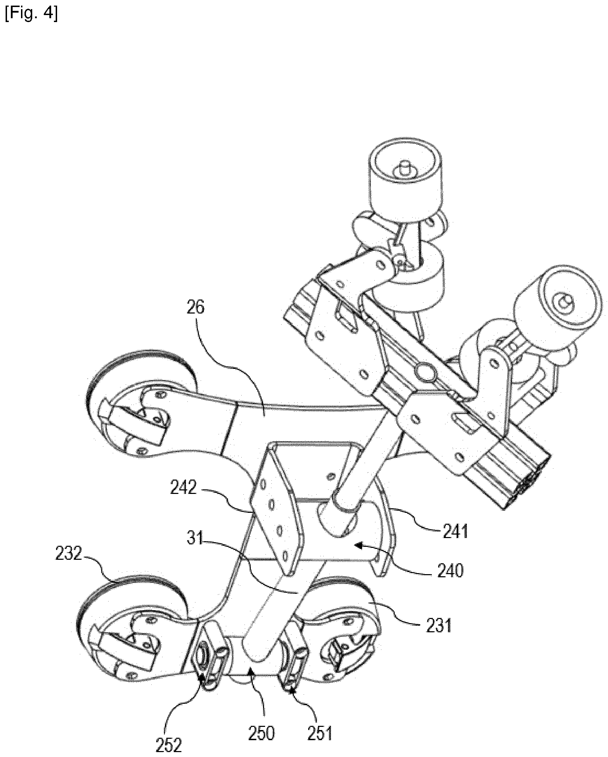

En référence aux figures 3 et 4, l'organe d'attache supérieur comprend une entretoise 240 reliant transversalement un premier montant supérieur 241 et un deuxième montant supérieur 242.

L'organe d'attache inférieur comprend une entretoise 250 reliant transversalement un premier montant inférieur 251 et un deuxième montant inférieur 252.

L'entretoise 240 est percée par un trou 243 destiné à recevoir l'extrémité inférieure 31 du bras télescopique 3 et l'entretoise 250 est percée par un trou 253 destiné à recevoir l'extrémité inférieure 31 du bras télescopique 3.

Les premier 241 et d'un deuxième 242 montants supérieurs sont munis d'une série de 4 alésages.

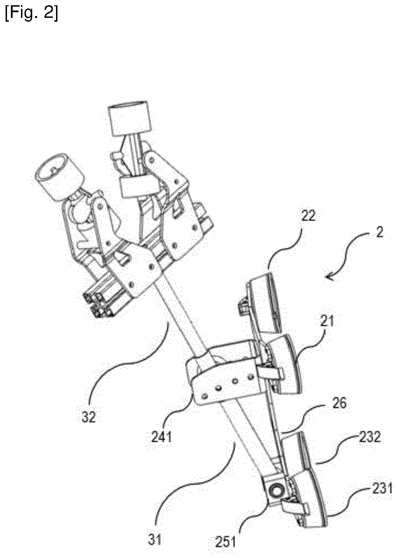

En référence à la figure 2, le bras télescopique comprend une extrémité inférieure tubulaire 31 solidaire du support de fixation 2 et une extrémité supérieure tubulaire 32 déployable. L'angle entre le bras télescopique 3 et le premier plan est de 17 °.

En référence à la figure 5, le guide 4 comprend une fourche 43 constituée d'une base de support 47 et des première et deuxième extrémités 45, 46, une sangle 44 est suspendue entre les première et deuxième extrémités 45, 46 de la fourche. L'extrémité supérieure 32 est munie d'une butée 50 limitant le pivotement de ladite extrémité supérieure à un angle prédéterminé, de préférence inférieur à 180°. Deux traverses 48, 49 de renfort du guide sont également fixées à la fois en un point de l'extrémité supérieure 32 et en un point de la base de support 47 du guide 4.

En référence à la figure 1, le guide 4 comporte une fourche 43 fixée à l'extrémité supérieure 32 du bras télescopique et comprenant une base de support 47 et deux montants correspondant aux première et deuxième extrémités 45, 46 sur lesquels sont fixés les première et deuxième surfaces de guidage 41, 42 formées par des rouleaux montés sur des supports de rouleaux 431, 432.

En référence à la figure 5, une sangle 44 suspendue entre les première et deuxième extrémités 45, 46 de la fourche forme les première et deuxième surfaces de guidage.

### Utilisation

Lors de son utilisation, le dispositif 1 selon l'invention est fixé sur une surface de véhicule au moyen de la première ventouse de fixation voire des première et deuxième ventouses de fixation 21, 22 et du moyen de contact 23.

Le bras télescopique 3 est ensuite déployé dans le volume supérieur de manière à placer le guide 4 à une hauteur supérieure au toit du véhicule, généralement le guide 4 est placé à une hauteur supérieure de 100 à 200 mm par rapport à la hauteur du véhicule, avantageusement le guide 4 est placé dans une position s'étendant parallèlement à l'axe principal du véhicule. Le déploiement du bras télescopique 3 peut être effectué avant ou après la fixation du dispositif 1 sur l'ouvrant du véhicule, de manière préférée, le bras télescopique 3 est déployé avant la fixation du dispositif 1 sur l'ouvrant du véhicule.

Le kayak est ensuite positionné verticalement de manière telle que l'une de ses extrémités soit posée au sol et l'autre extrémité au contact des surfaces de guidage c'est-à-dire au contact de la sangle ou de la paire de rouleaux. Ainsi positionné, le kayak peut être facilement hissé sur le toit du véhicule, il est ainsi placé dans une position perpendiculaire à l'axe principal du véhicule.

Dans un deuxième temps, on fait pivoter le bras télescopique 3 de manière à placer une des extrémités du kayak sur une des barres de toit. Dans un troisième temps, on soulève l'autre extrémité du kayak pour la placer sur l'autre barre de toit. Le kayak peut ensuite être aisément attaché aux barres de toit disposées sur le véhicule.

Pour désinstaller le bras télescopique 3, on le fait pivoter de manière à placer le guide 4 dans une position sensiblement parallèle au troisième plan, le dispositif est ensuite détaché du véhicule, le bras télescopique étant replié avant ou après le décrochage du dispositif de l'ouvrant du véhicule.

## Revendications

1. Dispositif (1) pour le chargement ou le déchargement d'un objet, de préférence un canot, au-dessus ou du dessus d'un véhicule, ledit dispositif (1) comprenant:
- un support de fixation (2) du dispositif à une surface du véhicule, ledit support de fixation comprenant au moins une première ventouse de fixation et au moins un moyen de contact (23) ;
- un bras télescopique (3) présentant une extrémité solidaire du support de fixation (2) l'autre extrémité étant déployable,
- un guide (4) dudit objet, solidaire de l'extrémité déployable du bras télescopique (3), le guide (4) comportant au moins une première surface de guidage,
**caractérisé en ce que** ladite surface du véhicule s'étend selon une direction verticale en relation avec la position normale du véhicule à l'arrêt,
ledit guide étant monté pivotant par rapport audit support de fixation, ledit
dispositif comprenant un mécanisme de réglage de la direction d'inclinaison du bras télescopique (3) par rapport au support de fixation (2).

2. Dispositif selon la revendication 1, dans lequel
- le support de fixation (2) du dispositif à une surface du véhicule s'étendant selon une direction verticale comprend au moins des première et deuxième ventouses de fixation (21, 22) et un moyen de contact (23) positionnés dans un premier plan, un deuxième plan passant par les première et deuxième ventouses de fixation et perpendiculaire au premier plan délimitant un volume inférieur et un volume supérieur, le moyen de contact (23) étant dans le volume inférieur ;
- le bras télescopique (3) présente une extrémité inférieure (31) solidaire du support de fixation (2) et une extrémité supérieure (32) déployable dans le volume supérieur et selon une direction inclinée par rapport au premier plan, un troisième plan passant par le bras télescopique 3 et perpendiculaire au premier plan, délimitant un volume gauche et un volume droit ;
- le guide (4) dudit objet est solidaire de l'extrémité supérieure déployable (32) du bras télescopique (3) et comporte des première et deuxième surfaces de guidage (41, 42).

3. Dispositif selon la revendication 2, dans lequel la distance entre les première et deuxième surfaces de guidage est d'au moins 400 mm selon un axe perpendiculaire à ladite direction inclinée, avantageusement elle va de 400 mm à 1200 mm.

4. Dispositif selon la revendication 3 dans lequel ledit guide (4) comporte :
- une fourche (43) fixée à l'extrémité supérieure (32) du bras télescopique (3) et présentant des première et deuxième extrémités (45, 46) distantes d'au moins 400 mm selon ledit axe perpendiculaire à ladite direction inclinée ;
- une sangle (44) suspendue entre les première et deuxième extrémités de la fourche et formant lesdites première et deuxième surfaces de guidage (41, 42).

5. Dispositif selon l'une quelconque des revendications 2 ou 3, dans lequel ledit guide (4) comporte des rouleaux formant lesdites première et deuxième surfaces de guidage (41, 42).

6. Dispositif selon l'une quelconque des revendications précédentes, dans lequel le guide (4) est monté pivotant par rapport audit support de fixation (2) sur une course limitée.

7. Dispositif selon l'une quelconque des revendications précédentes, dans lequel le guide (4) est monté pivotant autour de ladite direction inclinée.

8. Dispositif selon la revendication 2 ou l'une quelconque des revendications 3 à 7 en combinaison avec la revendication 2 dans lequel la première ventouse de fixation (21) est dans le volume gauche, et la deuxième ventouse de fixation (22) est dans le volume droit.

9. Dispositif selon la revendication 8 dans lequel le moyen de contact (23) comporte un premier et un deuxième organes de contact, le premier organe de contact (231) étant dans le volume gauche, le deuxième organe de contact (232) étant dans le volume droit.

10. Dispositif selon la revendication 9 dans lequel le premier organe de contact (231) comporte une première ventouse de contact et le deuxième organe de contact (232) comporte une deuxième ventouse de contact.

11. Dispositif selon l'une quelconque des revendications 2 à 10 dans lequel l'angle entre le bras télescopique (3) et le premier plan est compris entre 17° et 45°.

12. Dispositif selon l'une quelconque des revendications 2 à 11 dans lequel les première et deuxième surfaces de guidage sont montées sur une base de support (47) rétractable.

13. Dispositif selon l'une quelconque des revendications 2 à 11 dans lequel l'extrémité supérieure (32) du bras télescopique (3) est munie d'une butée (50) limitant le pivotement de ladite extrémité supérieure à un angle prédéterminé, de préférence inférieur à 180°.]

## Patentansprüche

1. Vorrichtung (1) zum Beladen oder Entladen eines Gegenstandes, vorzugsweise eines Bootes, über oder auf einem Fahrzeug, wobei die Vorrichtung (1) umfasst:
- eine Halterung (2) zum Befestigen der Vorrichtung an einer Oberfläche des Fahrzeugs, wobei die Befestigungshalterung mindestens einen ersten Befestigungssaugnapf und mindestens eine Kontakteinrichtung (23) umfasst;
- einen Teleskoparm (3), der ein mit der Befestigungshalterung (2) fest verbundenes Ende aufweist, wobei das andere Ende ausziehbar ist,
- eine Führung (4) des Gegenstandes, die mit dem ausziehbaren Ende des Teleskoparms (3) fest verbunden ist, wobei die Führung (4) mindestens eine erste Führungsfläche beinhaltet,
**dadurch gekennzeichnet, dass** sich die Oberfläche des Fahrzeugs in einer vertikalen Richtung bezüglich der normalen Position des Fahrzeugs im Stillstand erstreckt, wobei die Führung in Bezug auf die Befestigungshalterung schwenkbar montiert ist,
wobei die Vorrichtung einen Mechanismus zum Einstellen der Neigungsrichtung des Teleskoparms (3) in Bezug auf die Befestigungshalterung (2) umfasst.

2. Vorrichtung nach Anspruch 1, wobei:
- die Halterung (2) zum Befestigen der Vorrichtung an einer Oberfläche des Fahrzeugs, die sich in einer vertikalen Richtung erstreckt, mindestens erste und zweite Befestigungssaugnäpfe (21, 22) und eine Kontakteinrichtung (23) umfasst, die in einer ersten Ebene angeordnet ist, wobei eine zweite Ebene durch den ersten und zweiten Befestigungssaugnapf und senkrecht zur ersten Ebene verläuft, ein unteres Volumen und ein oberes Volumen eingrenzend, wobei die Kontakteinrichtung (23) im unteren Volumen liegt;
- der Teleskoparm (3) ein unteres Ende (31) aufweist, das mit der Befestigungshalterung (2) fest verbunden ist, und ein oberes Ende (32), das im oberen Volumen und in einer Richtung geneigt in Bezug auf die erste Ebene ausziehbar ist, wobei eine dritte Ebene durch den Teleskoparm 3 und senkrecht zur ersten Ebene verläuft, ein linkes Volumen und ein rechtes Volumen eingrenzend;
- die Führung (4) des Gegenstandes mit dem ausziehbaren oberen Ende (32) des Teleskoparms (3) fest verbunden ist und erste und zweite Führungsflächen (41, 42) beinhaltet.

3. Vorrichtung nach Anspruch 2, wobei der Abstand zwischen der ersten und der zweiten Führungsfläche mindestens 400 mm in einer Achse senkrecht zur geneigten Richtung beträgt, vorteilhaft im Bereich von 400 mm bis 1200 mm.

4. Vorrichtung nach Anspruch 3, wobei die Führung (4) beinhaltet:
- ein Gabelstück (43), das am oberen Ende (32) des Teleskoparms (3) befestigt ist und ein erstes und zweites Ende (45, 46) aufweist, die mindestens 400 mm entlang der Achse senkrecht zur geneigten Richtung beabstandet sind;
- einen Gurt (44), der zwischen dem ersten und zweiten Ende des Gabelstücks aufgehängt ist und die erste und zweite Führungsfläche (41, 42) bildet.

5. Vorrichtung nach einem der Ansprüche 2 oder 3, wobei die Führung (4) Rollen beinhaltet, die die erste und die zweite Führungsfläche (41, 42) bilden.

6. Vorrichtung nach einem der vorhergehenden Ansprüche, wobei die Führung (4) schwenkbar in Bezug auf die Befestigungshalterung (2) auf einem begrenzten Hub montiert ist.

7. Vorrichtung nach einem der vorhergehenden Ansprüche, wobei die Führung (4) um die geneigte Richtung schwenkbar montiert ist.

8. Vorrichtung nach Anspruch 2 oder einem der Ansprüche 3 bis 7 in Kombination mit Anspruch 2, wobei der erste Befestigungssaugnapf (21) im linken Volumen ist und der zweite Befestigungssaugnapf (22) im rechten Volumen ist.

9. Vorrichtung nach Anspruch 8, wobei die Kontakteinrichtung (23) ein erstes und ein zweites Kontaktelement beinhaltet, wobei das erste Kontaktelement (231) im linken Volumen ist und das zweite Kontaktelement (232) im rechten Volumen ist.

10. Vorrichtung nach Anspruch 9, wobei das erste Kontaktelement (231) einen ersten Kontaktsaugnapf beinhaltet und das zweite Kontaktelement (232) einen zweiten Kontaktsaugnapf beinhaltet.

11. Vorrichtung nach einem der Ansprüche 2 bis 10, wobei der Winkel zwischen dem Teleskoparm (3) und der ersten Ebene zwischen 17° und 45° liegt.

12. Vorrichtung nach einem der Ansprüche 2 bis 11, wobei die erste und die zweite Führungsfläche auf einer einziehbaren Halterungsbasis (47) montiert sind.

13. Vorrichtung nach einem der Ansprüche 2 bis 11, wobei das obere Ende (32) des Teleskoparms (3) mit einem Anschlag (50) versehen ist, der das Schwenken des oberen Endes auf einen vorbestimmten Winkel begrenzt, vorzugsweise kleiner als 180°.

## Claims

1. A device (1) for loading or unloading an object, preferably a boat, above or on top of a vehicle, said device (1) comprising:
- a support (2) for fixing the device to a surface of the vehicle, said fixing support comprising at least one first fixing suction cup and at least one contact means (23);
- a telescopic arm (3) having one end integral with the fixing support (2) the other end being deployable,
- a guide (4) of said object, integral with the deployable end of the telescopic arm (3), the guide (4) including at least one first guide surface,
**characterised in that** said surface of the vehicle extends in a vertical direction relative to the normal position of the stationary vehicle,
said guide being pivotably mounted with respect to said fixing support,
said device comprising a mechanism for adjusting the direction of inclination of the telescopic arm (3) relative to the fixing support (2).

2. The device according to claim 1, wherein
- the support (2) for fixing the device to a surface of the vehicle extending in a vertical direction comprises at least first and second fixing suction cups (21, 22) and a contact means (23) positioned in a first plane, a second plane passing through the first and second fixing suction cups and perpendicular to the first plane delimiting a lower volume and an upper volume, the contact means (23) being in the lower volume;
- the telescopic arm (3) has a lower end (31) integral with the fixing support (2) and an upper end (32) that can be deployed in the upper volume and in a direction inclined with respect to the first plane, a third plane passing through the telescopic arm 3 and perpendicular to the first plane, delimiting a left volume and a right volume;
- the guide (4) of said object is integral with the deployable upper end (32) of the telescopic arm (3) and includes first and second guide surfaces (41,42).

3. The device according to claim 2, wherein the distance between the first and second guide surfaces is at least 400 mm along an axis perpendicular to said inclined direction, advantageously it ranges from 400 mm to 1200 mm.

4. The device according to claim 3 wherein said guide (4) includes:
- a fork (43) fixed to the upper end (32) of the telescopic arm (3) and having first and second ends (45, 46) at least 400 mm apart along said axis perpendicular to said inclined direction;
- a strap (44) suspended between the first and second ends of the fork and forming said first and second guide surfaces (41, 42).

5. The device according to any one of claims 2 or 3, wherein said guide (4) includes rollers forming said first and second guide surfaces (41, 42).

6. The device according to any one of the preceding claims, wherein the guide (4) is pivotably mounted relative to said fixing support (2) over a limited stroke.

7. The device according to any one of the preceding claims, wherein the guide (4) is pivotably mounted around said inclined direction.

8. The device according to claim 2 or any one of claims 3 to 7 as combined with claim 2 wherein the first fixing suction cup (21) is in the left volume, and the second fixing suction cup (22) is in the right volume.

9. The device according to claim 8 wherein the contact means (23) includes a first and a second contact member, the first contact member (231) being in the left volume, the second contact member (232) being in the right volume.

10. The device according to claim 9 wherein the first contact member (231) includes a first contact suction cup and the second contact member (232) includes a second contact suction cup.

11. The device according to any one of claims 2 to 10 wherein the angle between the telescopic arm (3) and the first plane is comprised between 17° and 45°.

12. The device according to any one of claims 2 to 11 wherein the first and second guide surfaces are mounted on a retractable support base (47).

13. The device according to any one of claims 2 to 11 wherein the upper end (32) of the telescopic arm (3) is provided with a stop (50) limiting the pivoting of said upper end to a predetermined angle, preferably less than 180°.
